# EUROPÄISCHE PATENTSCHRIFT

(11) **EP 2 504 476 B1**
(45) Veröffentlichungstag und Bekanntmachung des Hinweises auf die Patenterteilung: **01.02.2017**
(21) Anmeldenummer: 10784277.5
(22) Anmeldetag: 11.11.2010
(51) Int. Cl.: D04H 1/74, B29C 70/20, D01G 25/00

(54) **VERFAHREN ZUR KONTINUIERLICHEN HERSTELLUNG VON STAPELFASERGELEGEN AUS ENDLICH LANGEN VERSTÄRKUNGSFASERN MIT GERICHTETER FASERORIENTIERUNG**
METHOD FOR THE CONTINUOUS PRODUCTION OF LAID STAPLE FIBRE FABRICS FROM FINITELY LONG REINFORCING FIBRES WITH ALIGNED FIBRE ORIENTATION
PROCÉDÉ DE FABRICATION CONTINUE DE NON-TISSÉS EN FIBRE DISCONTINUE À PARTIR DE FIBRES DE RENFORCEMENT DE LONGUEUR FINIE DOTÉS D'UNE ORIENTATION DE FIBRE DIRIGÉE

(30) Priorität: 27.11.2009 DE 102009055912
(43) Veröffentlichungstag der Anmeldung: 03.10.2012
(73) Patentinhaber: SGL Carbon SE, 65201 Wiesbaden (DE); Bayerische Motoren Werke Aktiengesellschaft, 80807 München (DE)
(72) Erfinder: REUßMANN, Thomas, 07407 Rudolstadt (DE); LÜTZKENDORF, Renate, 07426 Königsee (DE); ORTLEPP, Gerald, 07407 Uhlstädt (DE)
(86) Internationale Anmeldenummer: PCT/EP2010/067316
(87) Internationale Veröffentlichungsnummer: WO 2011/064103

(56) Entgegenhaltungen:
- EP-A1- 0 588 017
- EP-A1- 1 798 175
- US-A- 3 187 387
- US-A- 5 182 835
- US-A- 5 476 703

## Beschreibung

Die vorliegende Erfindung betrifft ein Verfahren zur kontinuierlichen Herstellung von Stapelfasergelegen mit gerichteter Faserorientierung, bei dem die Gelege durch kontinuierliches Täfeln von gekrempeltem Faserflor unter definierten Ablegewinkeln erzeugt werden.

Nach einem derartigen Verfahren hergestellte Stapelfasergelege werden beispielsweise verwendet für die Herstellung hochfester faserverstärkter Kunststoffverbunde, wie sie in Windkraftanlagen, Flugzeugbau und Automobilindustrie Verwendung finden. Insbesondere in Beanspruchungsrichtung weisen diese Verbunde hohe Verbundfestigkeiten und Steifigkeiten auf, wozu eine definierte Faserorientierung erforderlich ist. Neben einer definierten Orientierung der endlichen Fasern haben die Gelege auch eine definierte Flächenmasse.

### Stand der Technik

Auf dem Gebiet der Faserverbundtechnik wurden in den letzten Jahren mit einer Reihe von Anwendungen in Windkraftanlagen, Flugzeugbau und Automobilindustrie viele neue Entwicklungen in der Praxis umgesetzt. Im Zusammenhang mit dem verstärkten Einsatz von Faserverbunden bekommt auch die Etablierung wirtschaftlicher Verarbeitungsmethoden einen hohen Stellenwert. Das trifft insbesondere auf die Fertigung der Faserverbundhalbzeuge (Herstellung von Geweben, Vliesen und Gelegen) zu.

Stapelfasergelen sind zum Beispiel aus EP1798175 und US5182835bekannt. Sie offenbaren Verfahren zur kontinuierlichen Herstellung von Stapelfasergelegen mit gerichteter Faserorientierung, wobei die Gelege durch kontinuierliches Täfeln von gekrempeltem Faserflor unter definierten Ablegewinkeln erzeugt werden.

Fasergelege haben bei der Herstellung von Faserverbundwerkstoffen neben den bekannten textilen Halbzeugen wie Rovings, Geweben und Vliesen eine sehr große Bedeutung. Durch die gestreckte und hochorientierte Faserlage können mit UD-Gelegen und Multiaxialgelegen sehr hohe Festigkeiten und Steifigkeiten bei geringem Gewicht der Bauteile erreicht werden. Die Gelege werden derzeit aus einer Vielzahl von Endlosrovings mit Hilfe so genannter Legeanlagen hergestellt. Ein derartiges Verfahren ist z.B. im Patent EP2028307 beschrieben. Mit den bereits bekannten Legeanlagen können die Faserorientierungen je nach Anforderungsfall genau eingestellt werden. In der Regel werden die Verbunde mit einem symmetrischen Gesamtaufbau aus unterschiedlichen Einzelschichten, die in unterschiedlichen Winkeln abgelegt wurden, hergestellt (0°, 90°, +45°, -45°). Entsprechend erfolgt auch der Schichtenaufbau der Multiaxialgelege. Charakteristisch für den klassischen Gelegeaufbau ist die Verwendung von endlos langen Verstärkungsfasern. Bei den derzeit eingesetzten Legeanlagen ist eine hohe Zugfestigkeit der Rovings erforderlich, da für die Realisierung einer gestreckten Faserlage hohe Fadenspannungen aufgebracht werden müssen. Eine kontinuierliche Zuführung von endlich langen Fasern oder Halbzeugen aus endlich langen Fasern mit geringer Zugfestigkeit ist mit den konventionellen Legeanlagen nicht machbar.

Eine weitere Möglichkeit, definierte Faserorientierungen zu erzeugen, ist das Wickelverfahren.
Die Nutzung dieser Technologie zur Herstellung von multiaxialen Gelegen wird in Patent DE102006057633 beschrieben. Das vorbekannte Verfahren ist dadurch gekennzeichnet, dass die Wickelebene und die Bevorratung des monoaxialen Geleges umeinander rotieren, um ein Gelege mit einer definierten Faserorientierung zu erzeugen. Der Winkel der Faserorientierung wird durch den Winkel der Längsachse der Wickelebene in Bezug auf die Schwerkraftrichtung eingestellt. Bei diesem Prinzip kommen allerdings auch Endlosrovings oder endlose Monoaxialgelege zum Einsatz. Dabei werden hohe Zugkräfte auf das zu wickelnde Material aufgebracht. Eine Zuführung und Ablage von endlichen Fasern ist bei diesem Verfahren nicht möglich.

Neben der Anwendung von Endlosfasern ist für die Herstellung von Verbundwerkstoffen aber auch der Einsatz von Fasern mit begrenzten Faserlängen (Stapelfasern) interessant. Aus diesem Grund wurden in der Vergangenheit einige Entwicklungen zu diesem Thema bekannt.

Eine Variante der Verarbeitung von endlich langen Fasermaterialien ist das Tapelegen, wo auch Gelege aus Faserabschnitten erzeugt werden können und die spannungsfreie Ablage von Verstärkungsmaterialien möglich ist.
Hierzu gibt es eine Reihe von bekannten technischen Lösungen wie z.B. in den Patenten DE10301646, DE102006035847 beschrieben. Allerdings wird hier nur das diskontinuierliche Ablegen von Gelegestücken beschrieben. Eine kontinuierliche spannungsfreie Ablage von endlich langen Fasern ist in diesem Prozess nicht möglich. Bekannt ist auch die Kombination von Vlieslegeprozessen und klassischer Gelegeherstellung. In Patent GB2012671 wird ein Verfahren beschrieben, wo endlich lange Carbonfasern mit Endlosfasern kombiniert werden. Allerdings kann mit diesem Verfahren keine definierte Orientierung der endlich langen Fasern erreicht werden.

Aus der Textilindustrie ist die kontinuierliche Ablage von endlich langen Fasern mittels Täfler bekannt. Die Herstellung von querorientierten Faservliesen und Kreuzlagenvliesen wird beispielsweise bei Joachim Lünenschloss et al.: Vliesstoffe. Georg Thieme Verlag, 1982, S.94 - 104 ISBN: 3-13-609401-8 beschrieben. Auf die dortigen Ausführungen und Abbildungen sowie die Definition der Fachbegriffe wird hiermit zum allgemeinen Verständnis der vorliegenden Erfindung Bezug genommen. Bei diesen Prozessen wird der von einer Krempelmaschine erzeugte Faserflor mehrfach übereinander gelegt, um eine hinsichtlich Flächenmasse und Legebreite definierte Vorlage für die Vliesherstellung zu erzeugen. Ein sehr häufig angewendetes Prinzip ist das Quertäfeln von Faserflor. Dabei wird der von der Krempel erzeugte Flor auf ein kontinuierlich laufendes Transportband abgelegt, welches in einem Winkel von 90° zur Produktionsrichtung der Krempel angeordnet ist. Die Geschwindigkeit der Ablage auf dem Band, die Legebreite und die Geschwindigkeit des Transportbandes bestimmen die Flächenmasse des Geleges, welches auf dem Band erzeugt wird. Bei dem Ablegen des Flors auf dem Transportband stellt sich in Abhängigkeit von den verschiedenen Geschwindigkeiten und der Legebreite ein bestimmter Winkel der Faserorientierung innerhalb des Geleges ein. Bedingt durch die Bauart der Täfler und die üblichen Geschwindigkeiten bei der Florherstellung können verschiedene Winkel realisiert werden. Allerdings sind die Winkel stets deutlich kleiner als 45°. Charakteristisch für das Täfeln von Faserflor ist vor allem, dass durch die kontinuierliche Ablage auf dem laufenden Transportband eine Vorzugsorientierung in 2 Richtungen (undefinierter Winkel) erzeugt wird. Dadurch ist dieses Prinzip zur Erzeugung von Gelegen mit einer definierten Faserorientierung (z.B genau unter den Winkeln +45° oder -45°) nicht möglich.

In der US 5,476,703 wird ein Verfahren beschrieben, bei dem ein Faserflor mittels eines Täflers kontinuierlich mehrschichtig übereinander abgelegt wird, wobei zunächst die Ausrichtung der einzelnen Lagen 75 ° bis 90 ° zur Längsausdehnung des Vlieses beträgt und danach das Vlies mit Hilfe eines Nadelstreckfeldes verstreckt wird, um den Winkel der Faserausrichtung im Vlies zu verändern. Allerdings ist mit diesem Verfahren keine exakt definierte Faserorientierung in vorgegebenen Winkeln möglich, sondern nur eine Angleichung der Vlieseigenschaften in Längs- und Querrichtung. Die Faserorientierung ist bei diesem Verfahren nicht definiert einstellbar und kann im Vlies durch unterschiedliche Verstreckgrade lokal unterschiedlich sein.

In der DE 32 42 539 A1 ist ein Verfahren zur Herstellung von Flor- und Vliesbahnen beschrieben, deren Breite die Arbeitsbreite der eigentlichen Vliesbildungsmaschinen übersteigt. Dabei werden zwei Florbahnen jeweils um 90 ° zur Arbeitsrichtung der Vliesbildungsmaschine umgelenkt, wobei die Umlenkungen in einem Abstand zueinander angeordnet sind, die der Breite einer der Florbahnen entspricht, so dass die beiden Florbahnen nach der Umlenkung nebeneinander liegen und ein Florband mit doppelter Breite entsteht. Hier geht es um die Vergrößerung der erzeugbaren Warenbreite. Ein gerichtetes Ablegen von Stapelfasern unter definierten Winkeln ist mit diesem bekannten Verfahren nicht möglich.

In der DE 103 45 953 A1 ist ein Verfahren zur kontinuierlichen Herstellung von Stapelfasergelegen mit gerichteter Faserorientierung der eingangs genannten Gattung beschrieben. Bei diesem Verfahren wird mittels eines Quertäflers ein Vliesstoff hergestellt, wobei allerdings dem Quertäfler eine Kombination aus einem Filamentflor und einem Faserflor zugeführt wird, so dass in dem Vliesstoff abwechselnd übereinander Lagen aus endlichen und endlosen Fasern liegen und es sich somit um kein reines Stapelfasergelege handelt. Es werden hier keine gerichteten Faserorientierungen erzeugt. Der Quertäfler ist wie üblich in einem Winkel von 90 ° zur Vorschubrichtung des Transportbandes ausgerichtet und letzteres hat einen kontinuierlichen Vorschub.

### Aufgabe der Erfindung

Der vorliegenden Erfindung liegt daher die Aufgabe zugrunde, die kontinuierliche Herstellung von Stapelfasergelegen aus endlich langen Verstärkungsfasern mit gerichteter Faserorientierung zu ermöglichen. Diese Stapelfasergelege werden verwendet für die Herstellung hochfester faserverstärkter Kunststoffverbunde, wie sie in Windkraftanlagen, Flugzeugbau und Automobilindustrie Verwendung finden. Wichtig ist dabei, dass insbesondere in Beanspruchungsrichtung diese Verbunde hohe Verbundfestigkeiten und Steifigkeiten aufweisen, wozu eine definierte Faserorientierung erforderlich ist. Neben einer definierten Orientierung sollen die Gelege auch eine definierte Flächenmasse besitzen.

Erfindungsgemäß wird die Aufgabe dadurch gelöst, dass das Ablegen des Faserflors auf ein getaktetes Transportband erfolgt, welches während der kontinuierlichen Faserablage unter dem vorgegebenen Winkel still steht und erst nach Ablegen der vorgesehenen Legebreite um eine definierte Distanz (Legeversatz) bewegt wird. Dadurch ist die Faserorientierung innerhalb der vorgegebenen Legebreite konstant. Die Ablage des Faserflors erfolgt somit in einem genau definierten Winkel.

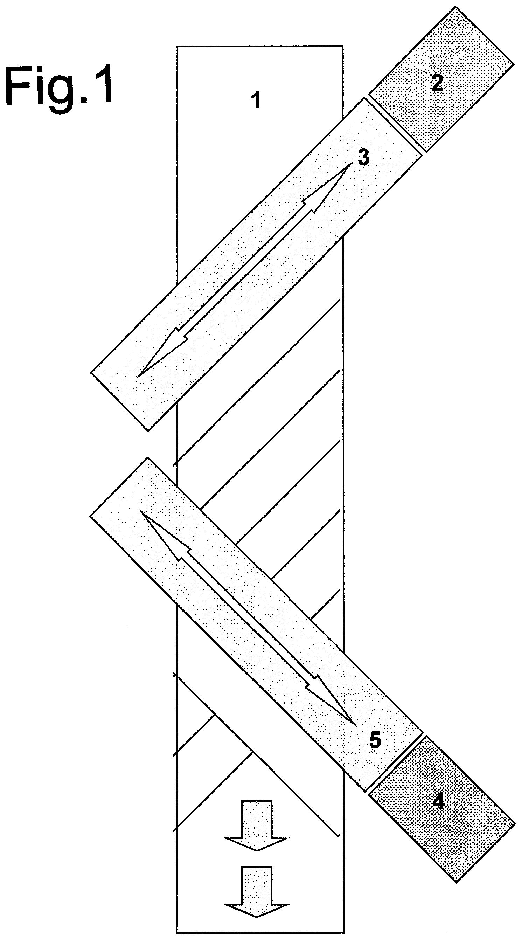

Die gewünschte Orientierung wird durch die Ausrichtung der Krempel und des Täflers in dem vorgegebenen Winkel zu dem Transportband erreicht (Bild 1).

Wenigstens eine Krempelmaschine, welche den Faserflor erzeugt und der dieser nachgeschaltete Täfler mittels dessen die Faserablage auf dem Transportband erfolgt, sind in einem spitzen Winkel zur Vorschubrichtung des getakteten Transportbandes angeordnet. Besonders bevorzugt sind Winkel der Ausrichtung im Bereich von zwischen ca. 30 ° bis ca. 60 ° zur Vorschubrichtung des Transportbandes, ganz besonders bevorzugt sind Winkel in der Größenordnung im Bereich von etwa 40 ° bis etwa 50 °, also Winkel um die 45 ° +/- einige Winkelgrade. Mit den herkömmlichen Täflern, welche mit kontinuierlich bewegtem Transportband arbeiten, können diese Winkel in der Regel nicht erreicht werden.

Erfindungsgemäß kann mit einer Krempel und nachgeschaltetem Täfler gearbeitet werden, es ist aber auch möglich, mehrere Krempelmaschinen mit nachgeschalteten Täflern zum Einsatz zu bringen, die in den gewünschten Winkeln zum Transportband angeordnet sind. Dadurch kann die Flächenmasse des zu erzeugenden Geleges erhöht werden. Außerdem können so gleichzeitig mehrere Legewinkel erzeugt werden. Das ermöglicht einen sehr wirtschaftlichen Legeprozess. Bevorzugt ist somit wenigstens eine erste Krempelmaschine mit einem dieser nachgeschalteten ersten Täfler unter einem ersten für die Faserablage vorgesehenen spitzen Winkel gegenüber dem Transportband angeordnet sind und wenigstens eine zweite Krempelmaschine mit einem dieser nachgeschalteten zweiten Täfler ist in einem zweiten für die Faserablage vorgesehenen gegenüber dem Transportband spitzen Winkel angeordnet, wobei dieser zweite Winkel rechtwinklig zu dem ersten Winkel ausgerichtet ist.

Bevorzugt arbeitet das erfindungsgemäße Verfahren so, dass jeweils in einer Hinbewegung des Täflers der Faserflor auf das Transportband abgelegt wird, danach das Transportband um eine definierte Distanz (Legeversatz) bewegt wird und danach in einer Herbewegung des Täflers wiederum bei stillstehendem Transportband erneut eine Ablage des Faserflors erfolgt.

Man kann beispielsweise vorsehen, dass der oder die Täfler vor einer Bewegungsumkehr über den Rand des Transportbands hinaus fährt, etwa zum Zeitpunkt dieser Bewegungsumkehr das Transportband um die definierte Distanz in Vorschubrichtung bewegt wird und nach der Ablage des Faserflors der Längsrandbereich des Geleges beschnitten wird. Dies hat den Vorteil, dass ein durch die kurze Vorschubbewegung des Transportbandes entstandener etwaiger Verzug des Geleges im Randbereich dadurch entfernt wird.

Gemäß einer Weiterbildung der Erfindung kann als Ausgangsmaterial wenigstens ein Faserflor aus einem Gemisch von Stapelfasern mit unterschiedlicher Zusammensetzung und/oder unterschiedlichen Eigenschaften, insbesondere umfassend endliche Verstärkungsfasern und/oder Bindefasern, eingesetzt werden oder es können wenigstens zwei Faserflore mit unterschiedlicher Zusammensetzung und/oder unterschiedlichen Eigenschaften, insbesondere umfassend endliche Verstärkungsfasern und/oder Bindefasern abgelegt werden, wenn beispielsweise mit zwei Krempelmaschinen und jeweils nachgeschaltetem Täfler gearbeitet wird.

Der Faserflor besteht bevorzugt aus endlich langen Fasern einer Länge im Bereich von 25 bis 150 mm. Der Faserflor kann insbesondere nachträglich zur späteren Verfestigung mit Bindemitteln versehen werden oder auch aus einem Gemisch von Stapelfasern mit unterschiedlicher Zusammensetzung oder Eigenschaften bestehen (z.B. Verstärkungsfasern und Bindefasern). Durch die bevozugte Verwendung von Bindemitteln oder thermoplastischen Bindefasern wird eine anschließende thermische Verfestigung des Geleges möglich. Die Verstärkungsfasern können beispielsweise Naturfasern oder hochfeste Fasern wie Aramid-, Glas-, Basalt- oder Kohlenstofffasern sein. In diesem Prozess ist es beispielsweise auch möglich, endlich lange Verstärkungsfasern aus Recyclingprozessen für die Herstellung von Gelegen mit definierter Faserorientierung und Flächenmasse einzusetzen.

Ein Vorteil des Verfahrens ist die Möglichkeit, in einem kontinuierlichen Prozess mit hohem Durchsatz Gelege aus Stapelfasern für Verbundwerkstoffe mit konstanten Ablegewinkeln, hoher Faserorientierung und definierter Flächenmasse zu erzeugen.
Der von der Krempel gebildete Faserflor weist bevorzugt eine hohe Längsorientierung auf, so dass in einem Faserkunststoffverbund (FKV) eine Anisotropie der Verbundfestigkeiten und/oder Verbundsteifigkeiten beispielsweise in einem Bereich von 1:1,5 bis 1:10 erreicht werden kann.

Das erfindungsgemäß hergestellte Gelege kann mit mindestens einer weiteren Funktions- oder Trägerschicht kombiniert werden und lässt sich somit für verschiedenste Anwendungsgebiete anpassen.

Eine bevorzugte Weiterbildung des erfindungsgemäßen Verfahrens sieht vor, dass sich jeweils parallel zueinander abgelegte benachbarte Lagen des Faserflors in ihren Randbereichen überlappen. Ein geringfügiges Maß der Überlappung kann hier bereits vorteilhaft sein. Dadurch erzielt man einen besseren Verbund der einzelnen Lagen in dem herzustellenden Stapelfasergelege.

Man kann auch einen Niederhalter verwenden, um einen Verzug des abgelegten Faserflors im Randbereich des Geleges zu vermeiden.

Die erfindungsgemäße Lösung ermöglicht ein winkelgenaues Ablegen von parallelen benachbarten Lagen des Faserflors mit vergleichsweise hohen Ablegegeschwindigkeiten. Die Krempelmaschine und der dieser nachgeschaltete Täfler geben aufgrund ihrer Ausrichtung zum Transportband einen genauen Winkel der Faserorientierung vor. Legt man zwei Faserflore mit zwei voneinander unabhängig arbeitenden Krempelmaschinen und Täflern in einem Winkel von 90 ° zueinander in zwei Positionen und zwei Lagen übereinander auf dem Transportband ab, lässt sich ein isotropes Stapelfasergelege mit definierter Ausrichtung der Fasern schaffen.

Die in den Unteransprüchen genannten Merkmale betreffen bevorzugte Weiterbildungen der erfindungsgemäßen Aufgabenlösung. Weitere Vorteile des erfindungsgemäßen Verfahrens ergeben sich aus der nachfolgenden Detailbeschreibung. Nachfolgend wird die Erfindung anhand von bevorzugten Ausführungsbeispielen unter Bezugnahme auf die beiliegende Zeichnung näher beschrieben.

### Beispiele

### Ausführungsbeispiel 1:

Ein Faserflor mit einer hohen Faserlängsorientierung und einer Flächenmasse von 30 g/m² wird über eine Krempelmaschine mit Im Arbeitsbreite erzeugt. Dieser Faserflor wird mit einem Horizontaltäfler in einer Legebreite von 2m auf ein getaktetes Transportband abgelegt. Dabei ist die Krempel mit dem nachgeschalteten Täfler im +45° Winkel zur Abzugsrichtung des Transportbandes angeordnet. Während der Faserablage steht das Transportband still. Nach Ablegen der vorgesehenen Breite (Hinbewegung des Täflers) wird das Transportband um 0,7m vorwärts bewegt. Danach erfolgt wiederum die Ablage des Faserflors (Herbewegung des Täflers). Auf diese Art und Weise kann ein Gelege mit einer +45° Faserorientierung und einer Flächenmasse von 60g/m² erzeugt werden.

### Ausführungsbeispiel 2:

Mit Hilfe von 2 Krempelmaschinen werden 2 Faserflore mit hoher Faserlängsorientierung mit je 1m Arbeitsbreite erzeugt. Die Faserflore werden mit Horizontaltäflern in einer Legebreite von 3 m auf ein getaktetes Transportband abgelegt. Dabei sind die Krempelmaschinen mit den nachgeschalteten Täflern im ±45° Winkel zur Abzugsrichtung des Transportbandes angeordnet. Während der Faserablage steht das Transportband still. Nach Ablegen der vorgesehenen Breite (Hinbewegung des Täflers) wird das Transportband um 0,7 m vorwärts bewegt. Danach erfolgt wiederum die Ablage des Faserflors (Herbewegung des Täflers). Auf diese Art und Weise kann ein Gelege mit einer ±45° Faserorientierung und einer Flächenmasse von 120g/m² erzeugt werden.

### Bezugszeichenliste

- 1: Transportband
- 2: Krempel 1
- 3: Täfler 1
- 4: Krempel 2
- 5: Täfler 2

## Patentansprüche

1. Verfahren zur kontinuierlichen Herstellung von Stapelfasergelegen mit gerichteter Faserorientierung, bei dem die Gelege durch kontinuierliches Täfeln von gekrempeltem Faserflor unter definierten Ablegewinkeln erzeugt werden, **dadurch gekennzeichnet, dass** das Ablegen des Faserflors auf ein getaktetes Transportband erfolgt, welches während der kontinuierlichen Faserablage unter dem vorgegebenen Winkel still steht und erst nach Ablegen der vorgesehenen Legebreite um eine definierte Distanz (Legeversatz) bewegt wird, und, dass wenigstens eine Krempelmaschinen (2, 4), welche den Faserflor erzeugt und der dieser nachgeschaltete Täfler (3, 5), mittels dessen die Faserablage auf dem Transportband (1) erfolgt, in einem spitzen Winkel zur Vorschubrichtung des getakteten Transportbandes angeordnet sind.

2. Verfahren nach Anspruch 1 **dadurch gekennzeichnet, dass** wenigstens eine erste Krempelmaschine (2) mit einem dieser nachgeschalteten ersten Täfler (3) unter einem ersten für die Faserablage vorgesehenen spitzen Winkel gegenüber dem Transportband (1) angeordnet sind und wenigstens eine zweite Krempelmaschinen (4) mit einem dieser nachgeschalteten zweiten Täfler (5) in einem zweiten für die Faserablage vorgesehenen gegenüber dem Transportband spitzen Winkel angeordnet. sind, wobei dieser zweite Winkel rechtwinklig zu dem ersten Winkel ausgerichtet ist.

3. Verfahren nach einem der Ansprüche 1 oder 2, **dadurch gekennzeichnet, dass** jeweils in einer Hinbewegung des Täflers (3, 5) der Faserflor auf das Transportband (1) abgelegt wird, danach das Transportband um eine definierte Distanz (Legeversatz) bewegt wird und danach in einer Herbewegung des Täflers wiederum bei stillstehendem Transportband erneut eine Ablage des Faserflors erfolgt.

4. Verfahren nach einem der Ansprüche 1 bis 3, **dadurch gekennzeichnet, dass** der oder die Täfler (3, 5) vor einer Bewegungsumkehr über den Rand des Transportbands hinaus fährt, etwa zum Zeitpunkt dieser Bewegungsumkehr das Transportband (1) um die definierte Distanz in Vorschubrichtung bewegt wird und nach der Ablage des Faserflors der Längsrandbereich des Geleges beschnitten wird.

5. Verfahren nach einem der Ansprüche 1 bis 4, **dadurch gekennzeichnet, dass** als Ausgangsmaterial wenigstens ein Faserflor aus einem Gemisch von Stapelfasern mit unterschiedlicher Zusammensetzung und/oder unterschiedlichen Eigenschaften, insbesondere umfassend endliche Verstärkungsfasern und/oder Bindefasern eingesetzt wird oder dass wenigstens zwei Faserflore mit unterschiedlicher Zusammensetzung und/oder unterschiedlichen Eigenschaften, insbesondere umfassend endliche Verstärkungsfasern und/oder Bindefasern abgefegt werden.

6. Verfahren nach Anspruch 5, **dadurch gekennzeichnet, dass** die Verstärkungsfasern eine Länge von 25 bis 150 mm aufweisen.

7. Verfahren nach einem der Ansprüche 1 bis 6, **dadurch gekennzeichnet, dass** der Faserflors nachträglich mit Bindemitteln behandelt wird.

8. Verfahren nach einem der Ansprüche 1 bis 7, **dadurch gekennzeichnet, dass** ein Faserflor aus einer definierten Mischung von Verstärkungsfasern und Bindefasern mit hoher Faserlängsorientierung verwendet wird.

9. Verfahren nach einem der Ansprüche 1 bis 8, **dadurch gekennzeichnet, dass** das Gelege nachfolgend thermisch verfestigt wird.

10. Verfahren nach einem der Ansprüche 1 bis 8 **dadurch gekennzeichnet, dass** das so erzeugte Gelege mit mindestens einer weiteren Funktions- oder Trägerschicht kombiniert wird.

11. Verfahren nach einem der Ansprüche 1 bis 10, **dadurch gekennzeichnet, dass** sich jeweils parallel zueinander abgelegte benachbarte Lagen des Faserflors in ihren Randbereichen überlappen.

## Claims

1. Method for the continuous production of laid staple fibre fabrics having a directional fibre orientation, the laid fabrics being produced by means of continuous plaiting down of carded fibre web at defined laying angles, **characterised in that** the fibre web is laid onto a synchronised transport belt which remains still during the continuous laying of the fibre at the predetermined angle and moves by a defined distance (laying offset) only after the provided laying width has been laid, and **in that** at least one carding machine (2, 4) that produces the fibre web, and the plaiting machine (3, 5) that is connected downstream thereof and by means of which the fibre is laid onto the transport belt (1), are arranged at an acute angle to the feed direction of the synchronised transport belt.

2. Method according to claim 1, **characterised in that** at least one first carding machine (2) together with a first plaiting machine (3) connected downstream thereof are arranged at a first acute angle, provided for laying the fibre, in relation to the transport bell (1), and at least one second carding machine (4) together with a second plaiting machine (5) connected downstream thereof are arranged at a second acute angle, provided for laying the fibre, in relation to the transport belt, said second angle being oriented perpendicularly to the first angle.

3. Method according to either claim 1 or claim 2, **characterised in that** the fibre web is laid onto the transport belt (1) during a forward movement of the plaiting machine (3, 5) in each case, the transport belt is subsequently moved by a defined distance (laying offset), and the fibre web is then laid again during a backward movement of the plaiting machine while the transport belt again remains still.

4. Method according to any of claims 1 to 3, **characterised in that** the plaiting machine(s) (3, 5) move(s) beyond the edge of the transport belt before a movement reversal, the transport belt (1) is moved by the defined distance in the feed direction at approximately the time of said movement reversal, and the longitudinal edge region of the laid fabric is cut after the fibre web has been laid.

5. Method according to any of claims 1 to 4, **characterised in that** at least one fibre web made of a mixture of staple fibres having different compositions and/or different properties, in particular comprising finite reinforcement fibres and/or binding fibres, is used as the starting material, or **in that** at least two fibre webs having different compositions and/or different properties, in particular comprising finite reinforcement fibres and/or binding fibres, are laid.

6. Method according to claim 5. **characterised in that** the reinforcement fibres have a length of from 25 to 150 mm.

7. Method according to any of claims 1 to B, **characterised in that** the fibre web is subsequently treated with binders.

8. Method according to any of claims 1 to 7, **characterised in that** a fibre web made of a defined mixture of reinforcement fibres and binding fibres having a high fibre longitudinal orientation is used.

9. Method according to any of claims 1 to 8, **characterised in that** the laid fabric is subsequently thermally bonded.

10. Method according to any of claims 1 to 8, **characterised in that** the laid fabric produced in this manner is combined with at least one additional functional or carrier layer.

11. Method according to any of claims 1 to 10, **characterised in that** adjacent layers of the fibre web laid parallel to one another in each case overlap in the edge regions thereof.

## Revendications

1. Procédé destiné à la fabrication en continu de nappes de fibres déposées discontinues avec une orientation dirigée des fibres, selon laquelle les nappes sont produites par tressage en continu de voile de carde cardé, selon des angles de dépose définis, **caractérisé en ce que** la dépose du voile de carde est réalisée sur une bande de transport cadencée, laquelle se trouve à l'arrêt pendant la dépose de fibres en continu, selon l'angle prédéfini, et n'est seulement mise en mouvement qu'après la dépose de la largeur de dépose prévue, sur une distance définie (décalage de la dépose), et **en ce qu'**au moins une carde (2, 4), laquelle produit le voile de carde, et la tresseuse (3, 5), raccordée en aval de ladite carde (2, 4), au moyen de laquelle est réalisée la dépose de fibres sur la bande de transport (1), sont disposées dans un angle aigu par rapport à la direction de l'avance de la bande de transport cadencée.

2. Procédé selon la revendication 1 **caractérisé en ce qu'**au moins une première carde (2) avec une première tresseuse (3), raccordée en aval de ladite carde, sont disposées selon un premier angle aigu, par rapport à la bande de transport (1), prévu pour la dépose de fibres, et au moins une deuxième carde (4) avec une deuxième tresseuse (5), raccordée en aval de ladite carde, sont disposées selon un deuxième angle aigu, par rapport à la bande de transport, prévu pour la dépose de fibres, dans lequel ce deuxième angle est orienté de manière perpendiculaire par rapport au première angle.

3. Procédé selon l'une des revendications 1 ou 2, **caractérisé en ce que** le voile de carde est déposé à chaque fois sur la bande de transport (1) dans une course aller de la tresseuse (3, 5), à la suite de quoi la bande de transport est déplacée d'une distance définie (décalage de la dépose) et à la suite de quoi une dépose du voile de carde est de nouveau réalisée dans une course de retour de la tresseuse, lorsque la bande de transport se trouve de nouveau à l'arrêt.

4. Procédé selon l'une des revendications 1 à 3, **caractérisé en ce que** la ou les tresseuse(s) (3, 5) se déplace(nt) au-delà de la bordure de la bande de transport, avant une inversion de la course, la bande de transport (1) est déplacée de la distance définie dans la direction de l'avance, ce à peu près au moment de cette inversion de la course, et la partie de la bordure longitudinal de la nappe est découpée après la dépose du voile de carde.

5. Procédé selon l'une des revendications 1 à 4, **caractérisé en ce qu'**au moins un voile de carde à partir d'un mélange de fibres discontinues présentant une composition différente et/ou des propriétés différentes, comprenant en particulier des fibres de renforcement finies et/ou des fibres de liaison est employé en tant que matériau de base, ou **en ce que** sont déposés au moins deux voiles de carde présentant une composition différente et/ou des propriétés différentes, comprenant en particulier des fibres de renforcement finies et/ou des fibres de liaison.

6. Procédé selon la revendication 5, **caractérisé en ce que** les fibres de renforcement présentent une longueur comprise entre 25 et 150 mm.

7. Procédé selon l'une des revendications 1 à 6, **caractérisé en ce que** le voile de carde est traité ultérieurement avec des agents de liaison.

8. Procédé selon l'une des revendications 1 à 7, **caractérisé en ce qu'**un voile de carde est utilisé, composé à partir d'un mélange défini de fibres de renforcement et de flbres de liaison et présentant une orientation longitudinale élevée des fibres

9. Procédé selon l'une des revendications 1 à 8, **caractérisé en ce que** la nappe est ensuite contrecollée de manière thermique.

10. Procédé selon l'une des revendications 1 à 8 **caractérisé en ce que** la nappe ainsi générée est combinée avec au moins une autre couche de fonction ou de support.

11. Procédé selon l'une des revendications 1 à 10, **caractérisé en ce que** des couches du voile de carde, lesquelles des couches adjacentes déposées respectivement parallèlement l'une par rapport à l'autre, se chevauchent au niveau de leurs zones de bordure.
